# EUROPEAN PATENT APPLICATION

(11) **EP 2 025 971 A1**
(43) Date of publication of application: **18.02.2009**
(21) Application number: 07744914.8
(22) Date of filing: 01.06.2007
(51) Int. Cl.: F16G 1/28, D02G 3/04, D02G 3/36, D02G 3/44

(54) **CANVAS FOR SYNCHRONOUS BELT AND SYNCHRONOUS BELT WITH THE SAME**

(30) Priority: 02.06.2006 JP 2006154679; 31.08.2006 JP 2006235390
(71) Applicant: Teijin Fibers Limited, Osaka-shi, Osaka 541-0054 (JP); Teijin Techno Products Limited, Osaka-shi, Osaka 541-0054 (JP)
(72) Inventor: OBORA, Kenji, Ibaraki-shi Osaka 567-0006 (JP); FURUKAWA, Masashi, Ibaraki-shi Osaka 567-0006 (JP)
(74) Representative: Hallybone, Huw George
(86) International application number: PCT/JP2007/061590
(87) International publication number: WO 2007/142318

(57) **Abstract**

The canvas of the present invention for forming a rough surface of toothed belt is formed from warp yarns which are formed from composite yarns each comprising a core yarn comprising, as a principal component, half-drawn synthetic fiber yarns having an elongation at break of 50 to 200% and a covering yarn wound around the core yarn, comprising, as a principal component, high mechanical strength, high treat resistant fibers and preferably twisted at a twist number of 300 to 4000 turns/m, and weft yarns; and has a capability of being easily produced by meaning, uniform appearance and yarn distribution and excellent abrasion resistance.

## Description

### Technical Field:

This invention relates to a canvas for toothed belt and to a toothed belt containing the same. More specifically, the invention relates to a canvas for toothed belt having excellent abrasion resistance and durability and to a toothed belt containing the same.

### Background Art:

Conventional toothed belts and sheet materials such as canvas contained therein have been disclosed in the following documents.
Patent document 1: JP-UM-A-62-204059
Patent document 2: JP-UM-B-63-15628
Patent document 3: JP-A-5-118388

A toothed belt is used in combination with pulley gears. The toothed belt has, on one surface side thereof, a rough surface having cogs and gullets that are alternately arranged. A canvas is stuck to the rough surface of the toothed belt, and covers the rough surface of the toothed belt profiling the shapes of cogs and gullets. The gullets and cogs on the rough surface of the toothed belt come in mesh with the cogs and gullets of the pulley gears to transmit power. The canvas that is going to be stuck is arranged on the toothed belt in a manner that the direction of warps is in conformity with the longitudinal direction of the toothed belt.

A conventional canvas stuck to the rough surface of the toothed belt has been disclosed in, for example, the patent document 1, and the warps of this canvas comprise yarns of a nylon fiber subjected to the crimping step.

The above toothed belt has been widely used as part of power distribution means for the cams of automotive engines. Accompanying the trend toward higher performance of automotive engines in recent years, however, increased loads are exerted on the toothed belt and, besides, the temperature is increasing in the engine room. As a result, it has been desired to improve the mechanical strength and durability of the toothed belt. To meet the above requirement, an attempt was made to use an aromatic polyamide fiber having both high mechanical strength and heat resistance as the warps for the canvas. However, it was difficult to crimp the aromatic polyamide fiber, and it was difficult to replace the crimped nylon fiber by the crimped aromatic polyamide fiber.

The patent document 2 discloses warps of a canvas formed from composite yarns which include elastic polyurethane yarns as core yarns while winding aromatic polyamide fiber yarns around the core yarns. In the composite yarns, however, the elastic polyurethane yarns and the aromatic polyamide fiber yarns easily slip relative to each other. Besides, the aromatic polyamide fiber yarns are so stiff that when the core yarns comprising the elastic polyurethane yarns in the composite yarns undergo the shrinking, the stiff aromatic polyamide fiber yarns wound around them assume a loop-like shape and protrude outward. Besides, their distribution on the core yarns becomes uneven. Therefore, the obtained canvas exhibits uneven appearance, possesses uneven thickness, and the thickness of the woven fabric thereof increases. Moreover, if the toothed belt covered with the above canvas is used in combination with pulley gears, the aromatic polyamide fiber yarns protruding like loops on the surface of the canvas forming the outer surface of the toothed belt are worn out upon coming in contact with the outer surfaces of the pulley gears. Therefore, the surface of the canvas forming the surface of the toothed belt is locally and unevenly worn out deteriorating the durability of the toothed belt.

The patent document 3 discloses composite yarns constituted by winding spun yarns comprising a para-type aromatic polyamide fiber around the core yarns comprising elastic polyurethane yarns and, further, winding on the outer side thereof, a synthetic fiber, such as nylon fiber, polyester fiber, aromatic polyamide fiber, aromatic polyester fiber or, preferably, a nylon fiber that can be easily crimped or a crimped yarn of polyester fiber, the composite yarns being used as warps of a canvas for a toothed belt. However, if a double covering is provided around the core yarns as described above, the obtained covered yarns possess a large thickness making it necessary to decrease the density of warps in the canvas. Therefore, the obtained canvas having a low density of warps exhibits a small mechanical strength and insufficient durability. Further, if the elastic polyurethane fiber is used as the core yarns of composite yarns for warps, it becomes necessary to strictly control the tension for the yarns containing the elastic fiber in the step of producing the composite yarns and in the step of producing the canvas. In practice, however, it is difficult to strictly control the tension. If controlling the tension is insufficient, the obtained canvas exhibits uneven performance. As a result, the obtained toothed belt exhibits decreased belt performance, such as durability.

Therefore, it has been strongly urged to provide a canvas for a toothed belt, that can be easily produced, that exhibits even performance such as abrasion resistance and durability, and that is highly practicable to a sufficient degree.

### Disclosure of the Invention:

The object of the present invention is to provide a canvas for toothed belt which can be easily produced featuring a high abrasion resistance and a high mechanical strength as well as even and high durability by solving the above-mentioned problems inherent in the prior arts, and to provide a toothed belt containing the above-mentioned canvas.

In order to solve the above problems, the present inventors have conducted a study and have discovered the fact that the above problems can be solved if composite yarns are used as the warps of the canvas that forms a rough surface of a toothed belt, the composite yarns being obtained by winding a yarn that contains, as a principal component, a fiber having a high mechanical strength and a high heat resistance around a core yarn which contains, as a principal component, a half-drawn synthetic fiber, and have completed the present invention.

The canvas cloth of the present invention for forming a rough surface of a toothed belt, having a plurality of engaging cogs and gullets alternately arranged with each other, is formed from a plurality of warp yarns and woven with each other,
wherein
the warp yarns comprises composite yarns each comprising a core yarn comprising, as a principal component, a half-drawn synthetic fiber yarn having an elongation at break of 50 to 200% and a covering yarn wound around the core yarn and comprising, as a principal component, fibers having high mechanical strength and high heat resistance.

In the canvas of the present invention for toothed belt, the half-drawn synthetic fiber yarn contained in the core yarn in the composite yarn for the warp is preferably formed from at least one type of half-drawn polyester fibers.

In the canvas of the present invention for toothed belt, the half-drawn polyester fibers are preferably polyethylene terephthalate filaments melt-spun at a winding-up speed of 2000 to 5000 m/minute.

In the canvas of the present invention for toothed belt the half-drawn synthetic fiber yarn contained in the core yarn in the composite yarn for the warp is preferably formed from at least one type of half-drawn aliphatic polyamide filaments.

In the canvas of the present invention for toothed belt, the covering yarn contained in the composite yarn for the warp preferably comprise, as a principal component, aromatic polyamide fibers.

In the canvas of the present invention for toothed belt, the covering yarn contained in the composite yarn for the warp preferably has a twist number of 300 to 4000 turns/m.

In the canvas of the present invention for toothed belt, the covering yarn contained in the composite yarn for the warp is preferably wound around the core yarn at a winding number of 500 to 4000 coils/m.

In the canvas of the present invention for toothed belt, in the composite yarn for the warp, the winding direction of the covering yarn around the periphery of the core yarn and the twisting direction of the covering yarn are opposite against each other.

In the canvas of the present invention for toothed belt, the weft yarns of the canvas preferably comprise, as a principal component, at least one type of fibers selected from aliphatic polyamide fibers, polyester fibers and aromatic polyamide fibers.

The toothed belt of the present invention has a rough surface thereof formed from the canvas as mentioned alone, wherein the warp direction of the canvas conforms to the longitudinal direction of a substrate of the toothed belt.

The canvas for toothed belt of the present invention can be easily produced and exhibits excellent mechanical properties and, particularly, abrasion resistance as well as homogeneous quality. Therefore, the canvas of the present invention can be evenly and closely fixed to the rough surface of a substrate of the toothed belt substrate bending and profiling the rough surface to a sufficient degree. When the toothed belt is used in combination with a toothed pulleys, the toothed belt exhibits excellent abrasion resistance and high durability without developing defects in the gullets or cogs in the rough surface of the belt.

### Brief Description of the Drawing:

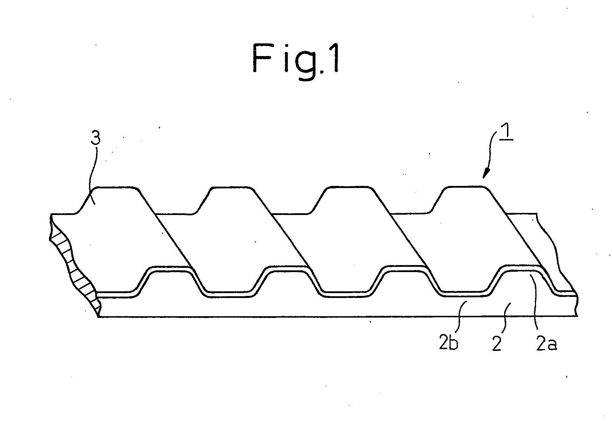

Fig. 1 is a partial view illustrating the constitution of a toothed belt of the invention.

### Best Mode for Carrying Out the Invention:

The canvas of the invention for toothed belt is used to provide a rough surface of a toothed belt that has a plurality of engaging cogs and gullets alternately arranged with each other. The toothed belt forms power transmission means upon being used in combination with toothed pulleys that have on the rough surfaces thereof cogs and gullets that come into engagement with the gullets and cogs.

Fig. 1 is a view illustrating a portion of the toothed belt of the invention. In Fig. 1, the toothed belt 1 includes a belt substrate 2 and a canvas portion 3, and in the belt substrate 1, cogs (mountains) 2 and gullets (valleys) 2b are alternately formed in the longitudinal direction. The canvas portion 3 is closely fixed to the rough surface of the belt substrate 2 in a shape bending and profiling the cog and gullet shapes of the rough surface. An expander (not shown) may be arranged in the belt substrate to prevent the elongation and deformation thereof.

It is preferred that the fabric structure of the canvas for toothed belt of the present invention includes a woven fabric and a knitted fabric and is preferably a woven fabric. Though there is no particular limitation to the textile weave of woven fabric for canvas of the present invention, it is usually preferred to use a plain or twill fabric. In particular, the twill fabric has a high covering factor and is suited for the canvas for toothed belt of the present invention. The yarn density of the woven fabric is preferably in a range of 30 to 120 yarns/2.54 cm and, more preferably, in a range of 50 to 100 yarns/2.54 cm for both warps and wefts.

As the warps for constituting the canvas for the toothed belt of the present invention, there are used composite yarns each comprising a core yarn containing, as a principal component, half-drawn synthetic fiber yarns having an elongation at break of 50 to 200%, and a covering yarn wound around the core yarn and containing, as a principal component, fiber having a high mechanical strength and a high heat resistance. The half-drawn synthetic fiber yarns having an elongation at break of 50 to 200%, preferably, 80 to 180% and, more preferably, 100 to 150% are used as the principal component of the core yarn for the composite yarn. The half-drawn synthetic fibers include synthetic filaments produced by drawing undrawn synthetic filaments obtained through a spinning step to an extent that after the drawing, the resultant drawn filaments exhibits the above mentioned elongation at break, and a synthetic fibers produced by a high speed spinning method in which method, the drawing step is omitted, and the spinning speed is controlled to an extent such that the spun filaments at the high speed exhibits the above-mentioned elongation at break.

According to the present invention, the principal component of the half-drawn synthetic fiber constituting the core yarn in the composite yarn for warps of the canvas for toothed belt, is, preferably, an aliphatic polyamide polymer as represented by nylon 6 or nylon 66, or a polyester polymer as represented by polyethylene terephthalate and polybutylene terephthalate. Among the above half-drawn fibers, the half-drawn polyester fibers which can be favorably handled and exhibit a high mechanical strength, are more preferably used for the canvas of the present invention. As the half-drawn polyethylene terephthalate fibers, there can be preferably used the one that is taken up at a melt-spinning speed of, for example, 2000 to 5000 m/minute and have an elongation at break lying in the above-mentioned range. It is preferable that the half-drawn synthetic fiber for core yarns have a thickness in a range of 0.1 to 50 dtex and, more preferably, 1 to 10 dtex.

The half-drawn synthetic fibers for core yarns may be in the form of either a multi-filament yarn or a spun yarn but is, preferably, the multi-filament yarn. The core yarn has a thickness in a range of, preferably, 80 to 330 dtex and, more preferably, 110 to 280 dtex.

The half-drawn synthetic fiber and core yarns having thicknesses smaller than the above lower limit may often cause such an inconvenience as defective weaving. If their thicknesses exceed the above-mentioned upper limits, on the other hand, an inconvenience may often occur, such as defective belt formability. The core yarns comprising the multi-filament yarns may not be twisted or may be twisted at a twist number of 10 to 100 turns/m. Untwisted yarns, however, are preferred.

For the covering yarn of the composite yarn from which the warps of the canvas for toothed belt of the invention are constituted, fibers having a high mechanical strength and a high heat resistance are used. Examples of the fiber having a high mechanical strength and a high heat resistance include aromatic polyamide fibers (para-type and meta-type), wholly aromatic polyester fibers, metal fibers, carbon fibers and glass fibers. From the standpoint of mechanical strength and heat resistance, however, the aromatic polyamide fibers are preferably used. The fibers for the covering yarn have a thickness of, preferably, 0.1 to 30 dtex and, more preferably, 1 to 10 dtex. Further, the covering yarn has a thickness of, preferably, 220 to 1670 dtex and, more preferably, 440 to 1200 dtex.

The covering yarn may be an untwisted yarn or a twisted yarn which is twisted at a twist number of, preferably, 300 to 4000 turns/m, more preferably, 500 to 3000 turns/m and, further preferably, 1000 to 2000 turns/m.

The fibers of the covering yarn and covering yarns respectively having thicknesses smaller than the above-mentioned lower limits may often cause such an inconvenience as defective weaving. If their thicknesses respectively exceed the above upper limits, on the other hand, an inconvenience may often occur, such as defective belt formability. The covering yarns twisted at a twist number less than 300 turns/m may often cause such an inconvenience as insufficient durability. If the covering yarns are twisted at a twist number more than 4000 turns/m, on the other hand, an inconvenience may often occur, such as defective weaving.

In the composite yarns from which the warps of the canvas for toothed belt of the invention are constituted, the covering yarn is wound around the core yarn and, therefore, the peripheral surface of the core yarn is covered with the covering yarn.

The covering yarn is wound around the core yarn in a winding number of, preferably, 500 to 4000 coils/m and, more preferably, 1000 to 3000 coils/m. If wound in a winding number of less than 300 coils/m, the core yarn is not covered with the covering yarn to a sufficient degree and, therefore, the obtained canvas often has insufficient abrasion resistance. If wound in a winding number of more than 4000 coils/m, on the other hand, the obtained composite yarn becomes stiff often making it difficult to utilize the elongating property of the core yarn to a sufficient degree. Therefore, the obtained canvas cannot be deformed to a sufficient degree often causing such an inconvenience that the abrasion resistance becomes rather insufficient.

To fix the canvas of the present invention onto the base toothed belt material, the canvas is overlapped on the rough surface of the toothed belt substrate in a manner such that the warp direction of the canvas conforms to the longitudinal direction of the belt substrate. The core yarn of warp of the canvas contains, as a principal component, the half-drawn synthetic fiber and can be drawn in the longitudinal direction thereof. Therefore, the canvas deforms sufficiently profiling the rough form of the rough surface of the belt substrate, and can be closely adhered and fixed to the rough surface of the belt substrate. Further, the canvas fixed in a drawn form remains stable in its state. After adhered and fixed to the rough surface in a drawn state, therefore, the canvas does not produce a contracting force in the warp direction unlike the conventional canvases using the elastic polyurethane yarns as warps. Therefore, after adhered and fixed to the rough surface of the belt substrate, the canvas of the present invention does not produce contracting force and does not separate away from the rough area portions of the base belt material.

Further, the composite yarn used as the warp of the canvas of the present invention does not substantially have elastic stretchability. In the step of weaving the canvas, therefore, the tension of the warp can be controlled very easily as compared to when the polyurethane elastic yarns are used. Besides, the core yarn in the warp yarn does not substantially have elastic stretchability. In the step of producing the composite yarns and in the step of weaving the canvas, therefore, the core yarn in the warps do not undergo elastic elongation and shrinkage and, besides, there occurs no covering spots (uneven distribution) of the covering yarns stemming from the elastic elongation and shrinkage of core yarns. Therefore, the resultant canvas features even appearance and texture and, therefore, even performances. In the warps of the canvas of the present invention, further, the covering yarn comprising fibers having a high mechanical strength and a high heat resistance is evenly covering the core yarns. Therefore, the resultant canvas has a high mechanical strength and, particularly, a high abrasion resistance and, further, maintains a high mechanical strength and, particularly, a high abrasion resistance even in a high-temperature atmosphere. Accordingly, the rough surface (which surface engages with the rough surfaces of toothed pulleys) of the toothed belt covered with the canvas of the present invention exhibits a high abrasion strength over a wide range of temperatures of from normal temperature to a high temperature.

To produce the composite yarns for warps, a covering yarn may be wound around the core yarn according to a conventional method to cover the core yarn by using an apparatus for producing composite yarns, such as a covering machine or a doubler twister. The wefts which, together with the warps, constitute the canvas for toothed belt of the invention preferably contains, as principal components, one or more types of fibers selected from nylon 6 fibers, nylon 66 fibers, polyester fibers and aromatic polyamide fibers though there is no particular limitation so far as the object of the present invention is not hampered. The aromatic polyamide fibers may be either of the para-type or the meta-type. There is no particular limitation on the kind of the wefts, and any one of multi-filament yarns, staple fiber-spun yarns or crimped yarns may be used. Preferably, however, staple fiber-spun yarns are used having a thickness of 110 to 660 dtex and, preferably, 220 to 440 dtex.

It is, further, preferable that the canvas of the present invention has a density of wefts of 30 to 120 wefts/2.54 cm and, more desirably, 50 to 100 wefts/2.54 cm.

The toothed belt of the present invention is constituted by a belt substrate having an outer surface with a number of cogs and gullets that are alternately arranged, and a canvas portion closely adhered and fixed onto the outer rough surface in a form bending and profiling the rough form. The belt substrate is constituted by a belt-like portion that extends in the longitudinal direction and a rough surface portion formed on one surface side thereof. The belt-like portion and the rough surface portion are both constituted by a rubber material (natural rubber, synthetic rubber, urethane elastomer, etc.) integrally together. A plurality of anti-tension members (for example, ropes formed by one or more types of fibers selected from glass fibers, carbon fibers, and aromatic polyamide fibers, and having a low elongation and a high tensile strength) are arranged in parallel in the belt-like portion along the longitudinal direction thereof to prevent the elongation of the belt. The belt substrate 1 and the canvas portion 2 are adhered together with an adhesive, for example, RFL (resorcin/formalin/latex). The toothed belt is usually in an annular (endless) form but may, as required, be in a belt form.

To produce the toothed belt(annular, endless), first, a cylindrical metal mold on the outer peripheral surface side of which, an internal mold corresponding to the rough surface of target toothed belt is engraved, is used. An adhesive, for example, RFL (resorcin/formalin/latex) is applied onto the outer surface of a cylindrically shaped canvas having a predetermined size. The cylindrically shaped canvas to which the adhesive is applied is fitted to the outer side of the cylindrical metal mold, the anti-tension members are spirally wound on the outer circumference of the canvas which maintaining gaps, between the wound anti-tension member, and then a raw rubber is arranged on the outer side thereof. The raw rubber is heated and pressed from the outer side thereof so as to flow toward the inside passing through the gaps between the wound anti-tension members, and the canvas is pushed onto the internal mold so as to bend into a shape corresponding to the rough surface of the inside mold to thereby form, on the inside thereof, a belt substrate that comprises the raw rubber and has the rough surface. Thereafter, the raw rubber is vulcanized and, at the same time, the belt substrate and the canvas are adhered together. After the completion of the forming step, the resultant toothed belt is taken out from the metal mold.

### EXAMPLES

The canvas for toothed belt and the toothed belt including the canvas of the present invention will be further illustrated by way of Examples.

In the following Examples and Comparative Examples, the canvas and the toothed belt were subjected to the tests as described below.

### (1) Test of weavability to canvas.

A canvas of the following texture:
Weave structure: 2/2 twill,
Warp density: 70 warps/2.54 cm,
Weft density: 82 wefts/2.54 cm, was woven by feeding predetermined warps and wefts to a rapier loom (manufactured by Tsudakoma Kogyo Co.) at a rotational speed of 300 rpm, observed for its variation in tension among the weaving steps, degree of variation in tension, smoothness and evenness (evenness of roughness distribution) of the surface of the resultant canvas, and the test results were evaluated as described below.

| Evaluation of weavability to canvas | Content |
|---|---|
| A. | Tension varies little, and roughness is almost evenly distributed on the surface of the product canvas. |
| B. | Tension varies greatly, and roughness is unevenly distributed on the surface of the product canvas. |

### (2) Test of formability to toothed belt.

A toothed belt having:
Width of belt: 19.1 mm,
Length: 875 mm (annular member),
Number of teeth (cogs): 92,
Pitch among teeth: 9.52 mm,
was produced by using an internal metal mold, from a canvas and the following materials:

| | |
|---|---|
| Raw rubber: | composition,: H-NBR (hydrogenated acrylonitrile/butadiene copolymer), |
| Anti-tension member: | material: glass fibers, size, 7 µm in diameter x 200 yarns x twisted three yarns, intervals of 0.26 mm, |
| Molding temperature: | 160°C or lower, |
| Heating time: | 20 minutes. |

The resultant toothed belts were subjected to a measurement of dispersion in height of the teeth (cogs). In each of Examples 1 to 3 and Comparative Examples 1 and 2, the dispersion in height of teeth of the toothed belt was compared with that in Comparative Example 1 which will be described later and is used as a reference the toothed belts having a dispersion in height of teeth smaller than the reference were regarded as A and those having a dispersion larger than the reference were regarded as B. Concerning Examples 4 to 6 and Comparative Example 3, dispersion of height of teeth of the toothed belt obtained in Comparative Example 3 was used as a reference; i.e., those having dispersion of height of teeth smaller than the reference were regarded as A and those having dispersion larger than the reference were regarded as B.

### (3) Test of Durability.

A toothed belt to be tested was wrapped round a drive pulley (having 20 teeth) and a driven pulley (having 20 teeth), mounted on a durability testing machine capable of adjusting the tension of the belt by using an idle pulley, and was subjected to a drive testing at an ambient temperature of 140°C, at a rotational speed of 6000 rpm under a tension of 5 N. The driving time was measured until the toothed belt became locally abraded and could not be normally driven. At the same time, the worn-out state of the toothed belt was shown.

### Example 1

A canvas was produced by using the following warps and wefts to test and evaluate their weavability.

### Constitution of the canvas.

### (1) Warp: composite yarn

| | | |
|---|---|---|
| (a) | Core yarn: | Half-drawn polyethylene terephthalate fiber yarn (trade name: N900H SDA250T48, manufactured by Teijin Fiber Co.) |
| | Yarn count: 250 | dtex/48 filaments |
| | Elongation at break: | 130% |
| (b) | Covering yarn: | Aromatic polyamide fiber stretch-broken, spun yarn (trade name: Technola GTN220T, manufactured by Teijin Techno-Products Co.) |
| | Yarn count: | 220 dtex |
| | Twist number (direction): | 1000 turns/m (z) |
| (c) | Winding number of the covering yarn (direction): | 2000 coils/m (s) |

| | | |
|---|---|---|
| (2) | Weft: | Nylon 66 fiber yarn (trade name: Leona 66 235T 35, manufactured by Asahi Kasei Sen-i Co.) |
| | Yarn count: | 235 dtex/35 filaments |

### (3) Weaving.

The above yarns were subjected to the weavability test (1) to a canvas and were evaluated for their weavability. The resultant canvas was put to the step of forming the toothed belt for test (2) and was evaluated for its formability.

The resultant toothed belt was put to durability test (3). The test results are as shown in Table 1.

### Example 2

A canvas and a toothed belt were produced in the same manner as in Example 1, and the production processability thereof was evaluated in the respective steps, and the obtained toothed belt was put to the durability test. In producing the composite yarn for the warp of the canvas, however, the winding number of the covering yarn around the core yarn was set to be 3000 coils/m.

The test results are as shown in Table 1.

### Example 3

In the same manner as in Example 1, a canvas was produced and a toothed belt was produced, the production processability was evaluated in the respective steps, and the obtained toothed belt was put to the durability test. In producing the composite yarn for the warp of the canvas, however, the winding number of the covering yarn around the core yarn was changed to be 1000 coils/m.

The tested results are as shown in Table 1.

### Comparative Example 1

In the same manner as in Example 1, the canvas was produced and the toothed belt was produced, and the obtained toothed belt was put to the durability test. In producing the canvas, however, a polyurethane elastic yarn (trade name: Loica 470T, manufactured by Asahi Kasei Sen-i Co., 470 dtex/1 filament) was used as the core yarn of the composite yarn for the warp of the canvas. The test results are shown in Table 1.

### Comparative Example 2

In the same manner as in Example 1, a canvas was produced and a toothed belt was produced, and the obtained toothed belt was put to the durability test. In producing the composite yarn for the warp for producing the canvas, however, the following covering yarn 1 was wound around the core yarn comprising the same polyurethane elastic yarn as that of Comparative Example 1 and, further, the following covering yarn 2 was wound thereon.

| | |
|---|---|
| Covering yarn 1: | Aromatic polyamide fiber stretch-broken spun yarn (trade name: Technola GTN220T, manufactured by Teijin Techno-Products Co.) |
| Twist number: | 1000 turns/m, 220 dtex |
| Winding direction: | S-direction |
| Winding member: | 2000 coils/m |
| Covering yarn 2: | Nylon 66 fiber yarn (trade name: Leona 66, 140T35, manufactured by Asahi Kasei Sen-i Co.) |
| Twist number: | 650 turns/m, 140 dtex/35 filaments |
| Winding direction: | Z-direction |
| Winding number: | 1000 coils/m |

The tested results are as shown in Table 1.

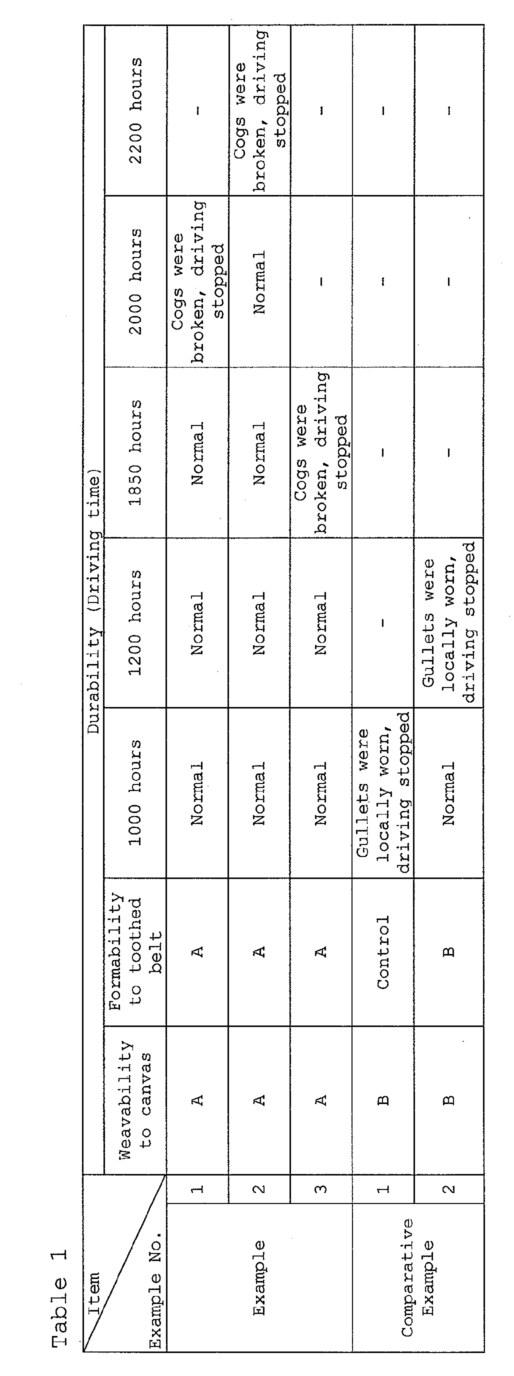

### Example 4

A canvas was produced by using the following warps and wefts to test and evaluate their weavability.

### Constitution of the canvas.

### (1) Warp: composite yarn

(a) Core yarn: Half-drawn polyethylene terephthalate filament yarn (trade name: N900H SDA250T48, manufactured by Teijin Fiber Co.)
   Yarn count: 250 dtex/48 filaments
   Elongation at break: 130%
(b) Covering yarn: Aromatic polyamide fiber stretch-broken spun yarn (trade name: Technola GTN220T, manufactured by Teijin Techno-Products Co.)
   Yarn count: 220 dtex
   Twist Number (direction): 1000 turns/m (z)
(c) Winding number of the covering yarn (direction):
   2000 coils/m (s)
(2) Weft: Nylon 66 fiber yarn (trade name: Leona 66 140T 35, manufactured by Asahi Kasei Sen-i Co.)
   Yarn count: 140 dtex/35 filaments

### (3) Weaving.

The above yarns were put to weavability test (1) for weaving to the canvas and were evaluated for their weavability. The obtained canvas was put to the procedure of forming the toothed belt for test (2) to toothed belt and was evaluated for its formability.

The obtained toothed belt was put to durability test (3). The test results are shown in Table 2.

### Example 5

In the same manner as in Example 4, a canvas was produced and a toothed belt was produced, and weavability to a canvas was evaluated in the respective productions, and the obtained toothed belt was put to the durability test. In producing the composite yarn for the warp of the canvas, however, the twist number of the covering yarn was changed to 2000 turns/m and the winding number of the covering yarn around the core yarn was set to be 3000 coils/m.

The test results are as shown in Table 2.

### Example 6

In the same manner as in Example 4, a canvas was produced and a toothed belt was produced, and weavability to canvas was evaluated in the respective steps, and the obtained toothed belt was put to the durability test. In producing the composite yarn for the warp of the canvas, however, the twist number of the covering yarn was changed to 500 turns/m and the winding number of the covering yarn around the core yarn was changed to be 1000 coils/m.

The test results are as shown in Table 2.

### Comparative Example 3

In the same manner as in Example 4, a canvas was produced and a toothed belt was produced, and the obtained toothed belt was put to the durability test. In producing the canvas, however, a polyurethane elastic yarn (trade name: Loica 470T, manufactured by Asahi Kasei Sen-i Co., 470 dtex/1 filament) was used as the core yarn of the composite yarn for the warp of the canvas. The test results are as shown in Table 2.

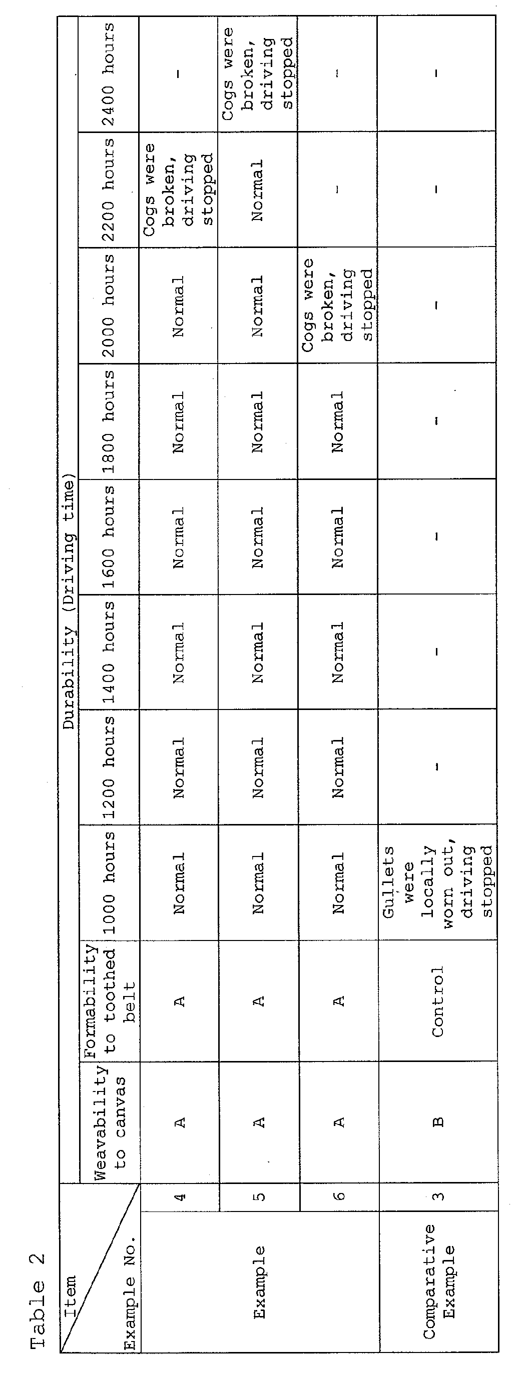

### Industrial Applicability:

The canvas for toothed belt of the present invention can be favorably woven, exhibits even appearance, and has an even yarn distribution and excellent abrasion resistance. When put into practical use in combination with toothed pulleys, the toothed belt of the present invention covered with the canvas exhibits excellent abrasion resistance and durability, and is highly practicable as a toothed belt for driving, for example, the cams of automotive engines.

## Claims

1. A canvas cloth for forming a rough surface of a toothed belt, having a plurality of engaging cogs and gullets alternately arranged with each other, which canvas is formed from a plurality of warp yarns and weft yarns woven with each other,
wherein
the warp yarns comprises composite yarns each comprising a core yarn comprising, as a principal component, a half-drawn synthetic fiber yarn having an elongation at break of 50 to 200% and a covering yarn wound around the core yarn and comprising, as a principal component, fibers having high mechanical strength and high heat resistance.

2. The canvas for toothed belt as claimed in claim 1, wherein the half-drawn synthetic fiber yarn contained in the core yarn in the composite yarn for the warp is formed from at least one type of half-drawn polyester fibers.

3. The canvas for toothed belt as claimed in claim 2, wherein the half-drawn polyester fibers are polyethylene terephthalate filaments melt-spun at a winding-up speed of 2000 to 5000 m/minute.

4. The canvas for toothed belt as claimed in claim 1, wherein the half-drawn synthetic fiber yarn contained in the core yarn in the composite yarn for the warp is formed from at least one type of half-drawn aliphatic polyamide filaments.

5. The canvas for toothed belt as claimed in claim 1, wherein the covering yarn contained in the composite yarn for the warp comprise, as a principal component, aromatic polyamide fibers.

6. The canvas for toothed belt as claimed in claim 1, wherein the covering yarn contained in the composite yarn for the warp has a twist number of 300 to 4000 turns/m.

7. The canvas for toothed belt as claimed in claim 1, wherein the covering yarn contained in the composite yarn for the warp is wound around the core yarn at a winding number of 500 to 4000 coils/m.

8. The canvas for toothed belt as claimed in claim 6, wherein in the composite yarn for the warp, the winding direction of the covering yarn around the periphery of the core yarn and the twisting direction of the covering yarn are opposite against each other.

9. The canvas cloth for toothed belt as claimed in claim 1, wherein the weft yarns of the canvas comprise, as a principal component, at least one type of fibers selected from aliphatic polyamide fibers, polyester fibers and aromatic polyamide fibers.

10. A toothed belt having a rough surface thereof formed from the canvas as claimed in any one of claims 1 to 7, wherein the warp direction of the canvas conforms to the longitudinal direction of a substrate of the toothed belt.
